# EUROPEAN PATENT APPLICATION

(11) **EP 4 668 442 A1**
(43) Date of publication of application: **24.12.2025**
(21) Application number: 23922230.0
(22) Date of filing: 29.06.2023
(51) Int. Cl.: H01M 50/258, H01M 50/244, H01M 10/613

(54) **BATTERY BOX BODY CAPABLE OF BEING STACKED IN MULTIPLE LAYERS, AND SYSTEM**

(30) Priority: 17.02.2023 CN 202310134829
(71) Applicant: Jiangsu Advanced Construction Machinery Innovation Center Ltd., Xuzhou, Jiangsu 221004 (CN)
(72) Inventor: WANG, Shuai, Xuzhou, Jiangsu 221004 (CN); SHAO, Xingguo, Xuzhou, Jiangsu 221004 (CN); XIAO, Penghui, Xuzhou, Jiangsu 221004 (CN)
(74) Representative: Proi World Intellectual Property GmbH
(86) International application number: PCT/CN2023/103545
(87) International publication number: WO 2024/169105

(57) **Abstract**

The invention provides a battery box capable of being stacked layer by layer and a battery system. The battery box is configured as a box structure. Threaded holes are circumferentially formed in an upper portion of the battery box, and unthreaded screw mounting holes corresponding to the threaded holes are formed in a lower portion of the battery box. Screw fasteners penetrate through the unthreaded screw mounting holes of an upper battery box and the threaded holes of a lower battery box to fixedly connect the upper battery box and the lower battery box. A battery frame is eliminated, and the upper battery box is directly stacked on the lower battery box, such that the space utilization of battery boxes in the battery system is greatly increased, and a vehicle can be loaded with more batteries under the same volume; by adopting this technical solution, the cooling system can also exert a benefit effect on the tops of batteries, thus improving heat management efficiency; in addition, the technical solution facilitates connection of wires and water lines between the battery boxes.

## Description

### BACKGROUND OF THE INVENTION

### 1. Technical Field

The invention belongs to the technical field of power batteries, and particularly relates to a battery box capable of being stacked layer by layer and a battery system.

### 2. Description of Related Art

The emphasis on environmental protection and carbon and emission reduction in China speeds up the electrification of commercial vehicles such as construction machines and heavy-duty trucks.

To prolong the operating time and reduce the charging frequency, a large quantity of batteries is loaded on these vehicles by means of multiple battery boxes. In the prior art, the battery boxes are mounted layer by layer on one or more battery frames which are layered in the height direction.

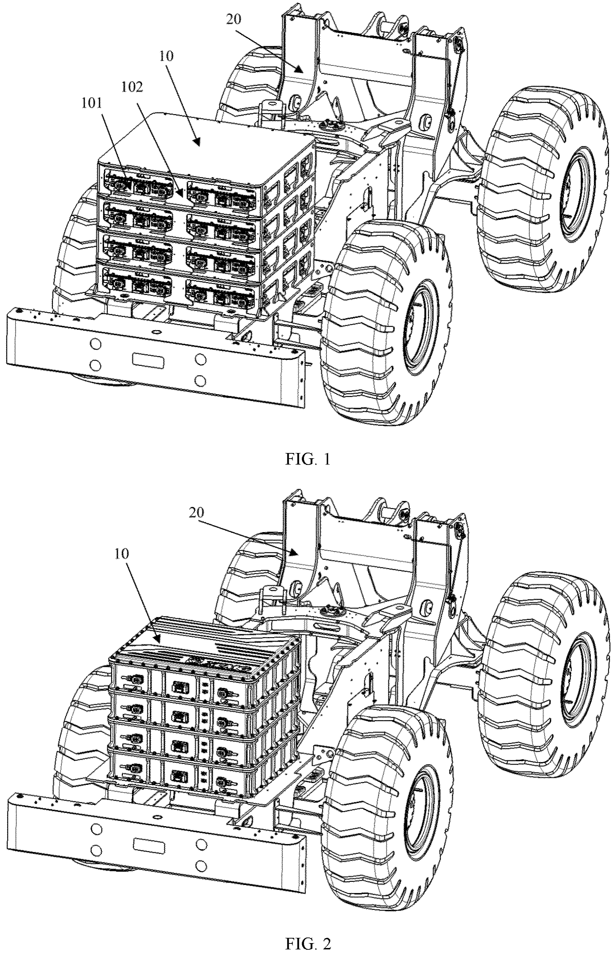

In the prior art, as shown in FIG. 1, a battery system is mounted on a vehicle frame 20; the battery system 10 comprises a battery frame 102 and a plurality of battery boxes 101, and the battery boxes 101 are mounted on the battery frame 101 layer by layer; to ensure the safety of batteries and facilitate installation, the height of each layer of the battery frame 101 should be greater than that of the battery boxes, and the width and length of the battery frame should also be greater than those of the battery boxes, so only part of the three-dimensional space occupied by the battery frame 101 is used for mounting the battery boxes 101, and the remaining space is not sufficiently used.

### BRIEF SUMMARY OF THE INVENTION

The objective of the invention is to overcome the defects in the prior art by providing a battery box capable of being stacked layer by layer and a battery system, which eliminate a battery frame and avoid gaps between adjacent layers of battery boxes in the height direction, thus greatly increasing the space utilization of battery boxes in the battery system.

To fulfill the above objective, the invention is implemented by the following technical solutions:
In a first aspect, the invention provides a battery box capable of being stacked layer by layer, wherein the battery box is configured as a box structure;
threaded holes are circumferentially formed in an upper portion of the battery box, and unthreaded screw mounting holes corresponding to the threaded holes are formed in a lower portion of the battery box;
screw fasteners penetrate through the unthreaded screw mounting holes of an upper battery box and the threaded holes of a lower battery box to fixedly connect the upper battery box and the lower battery box.

Further, the battery box comprises a battery box enclosure, a battery monitoring unit, interface devices and batteries;
the battery box enclosure is a case with a top being open and a bottom being closed, and a space defined by the battery box enclosure is used for receiving the battery monitoring unit and the batteries;
the interface devices are fixed to a vertical wall of the battery box;
the interface devices comprise high-voltage connectors, a manual service disconnect switch and low-voltage connectors;
the battery box enclosure comprises an upper brim, a bottom plate and the vertical wall connecting the upper brim and the bottom plate, and a lower brim is formed by the bottom plate located outside the vertical wall;
a plurality of pillars are circumferentially arranged on an outer side of the vertical wall.

Further, a groove is circumferentially formed in a middle of an upper surface of the upper brim and used for receiving a sealing strip;
cylindrical bumps are arranged in a middle of the groove, and the threaded holes for fixedly connecting the upper battery box and the lower battery box are formed in the bumps;
contact planes are arranged on two sides of the groove and are slightly higher than the cylindrical bumps to bear an acting force from the upper battery box;
locating protrusions are arranged in middles of the contact planes and are arc-shaped;
the unthreaded screw mounting holes are formed in the lower brim and are in one-to-one correspondence with the threaded holes in the upper brim;
locating grooves are formed in a lower surface of the lower brim, concave surfaces of the locating grooves are arc-shaped and correspond to the locating protrusions on the upper brim, and a size of the locating grooves is slightly greater than that of the locating protrusions to allow the upper battery box to smoothly slide to an appropriate position when stacked on the lower battery box;
the other portion, other than the locating grooves, of the lower surface of the lower brim is a contact plane; a portion, corresponding to the groove in the upper brim, of the contact plane is used for compressing the sealing strip, and remaining portions of the contact plane are in full contact with the contact planes of the upper brim to transmit the acting force from the upper battery box to the lower battery box;
in a natural state, the sealing strip is higher than the contact planes of the upper brim; and after the upper battery box is stacked on the lower battery box, the sealing strip is compressed to be as high as the contact planes of the upper brim.

Further, a liquid cooling vent is formed in each of two sides of a front wall of the battery box enclosure, and cooling liquid flows into the liquid cooling vent in one side and then enters a liquid collection cavity formed in the battery box enclosure;
the liquid collection cavity is a cavity formed in the battery box enclosure and has one end connected to the liquid cooling vent and the other end connected to a passage below the bottom plate, and the cooling liquid is transferred from the liquid collection cavity into the passage.

Further, three stages of step grooves, cross-sectional projections of which cover lower surfaces of the batteries, are machined in a lower surface of the bottom plate along in an inner side of the lower brim; a first stage of step groove, a second stage of step groove and a third stage of step groove are farther away from the lower surface of the bottom plate gradually, and the cross-sectional projection of the upper stage of step groove covers the cross-sectional projection of the lower stage of step groove; a first step is a contact plane of the lower brim, and a bottom sealing plate is attached to a third step and defines a passage chamber together with the third stage of step groove; and after the bottom sealing plate is attached to a third step, a lower surface of the bottom sealing plate is higher than the contact plane of the lower brim to ensure that the contact plane of the lower brim is a lowest plane of the battery box, so as to prevent a stress failure of the bottom sealing plate, and the lowest plane is also a next battery box;
a plurality of passage partition walls are arranged on a bottom surface of the third stage of step groove and divide the passage chamber into an S-shaped passage; and the cooling liquid flows along the S-shaped passage to enter a liquid collection cavity in the other side, then flows out via the liquid cooling vent in the other side, and finally enters the next battery box or a cooling device.

In a second aspect, the invention provides a battery system, wherein the battery system eliminates a battery frame and comprises multiple battery boxes described in the first aspect, wherein the battery boxes are stacked layer by layer to form the battery system;
the battery system is fixedly mounted on a vehicle.

Further, an upper battery box is directly stacked on a lower battery box, the battery box in the middle is not provided with a battery box cover, a bottom plate of the upper battery box functions as a top cover of the lower battery box, the battery box at the top is provided with the battery box cover, the battery box cover is provided with unthreaded screw mounting holes corresponding to threaded holes of the battery box at the top, and screw fasteners penetrate through the unthreaded screw mounting holes of the battery box cover and the threaded holes of the battery box at the top to fixedly connect the battery box cover and the battery box at the top.

Further, one high-voltage electrode of the battery system is connected to the high-voltage connector on one side of the battery box at the bottom by means of a high-voltage wire, and the high-voltage connector on the other side of the battery box at the bottom is connected to the high-voltage connector on the same side of the adjacent battery box above by means of a high-voltage wire;
the high-voltage connector on one side of the battery box in the middle is connected to one high-voltage connector of the battery box below by means of a high-voltage wire, and the high-voltage connector on the other side of the battery box in the middle is connected to the high-voltage connector on the same side of the battery box above by means of a high-voltage wire;
the high-voltage connector on one side of the battery box at the top is connected to one high-voltage connector of the battery box below by means of a high-voltage wire, and a high-voltage wire led out from the high-voltage connector on the other side of the battery box at the top used as the other electrode of the battery system;
a low-voltage input of the battery system is connected to one low-voltage connector of the battery box at the bottom by means of a low-volage wire, and the other low-voltage connector of the battery box at the bottom is connected to one low-voltage connector of the adjacent battery box above by means of a low-voltage wire;
one low-voltage connector of the battery box in the middle is connected to one low-voltage connector of the battery box below by means of a low-voltage wire, and the other low-volage connector of the battery box in the middle is connected to one low-voltage connector of the battery box above by means of a low-volage wire;
one low-volage connector of the battery box at the top is connected to one low-voltage connector of the battery box below by means of the low-voltage wire, and a low-voltage wire led out from the other low-volage connector of the battery box at the top used as a low-voltage output of the battery system;
one liquid cooling vent of the battery box at the bottom is a liquid inlet of the battery system, the liquid cooling vents of every two adjacent layers of battery boxes are connected by means of a water line, and a liquid outlet of the battery system is led out from the battery box at the top.

Further, the battery system operates in a vehicle-mounted state, the battery monitoring unit in each battery box measures voltage and temperature data of each battery in the battery box and transmits signals to a main controller by means of the low-voltage wire, and the main controller determines whether liquid cooling needs to be started or whether a high-voltage current of the battery system needs to be limited according to received information;
when cooling is started, cooling liquid flows into the battery system via the liquid inlet, flows through the S-shaped passage in the bottom plate of the battery box, then enters the S-shaped passage of the next battery box, and finally flows out of the battery system via the liquid outlet.

Further, in a case where positive and negative poles of the batteries are located on side faces, the bottom plate of the battery box above is attached to tops of the batteries by means of a middle heat conduction layer.

Compared with the prior art, the invention fulfills the following beneficial effects:
(1) The battery boxes can be stacked layer and layer:
   An upper battery box is directly stacked on a lower battery box, the battery box in the middle is not provided with a battery box cover, a bottom plate of the upper battery box functions as a top cover of the lower battery box, and only the battery box at the top is provided with the battery box cover; threaded holes are circumferentially formed in the upper brim of the battery box, unthreaded screw mounting holes are circumferentially formed in the lower brim of the battery box, and screw fasteners penetrate through the unthreaded screw mounting holes in the lower brim of the upper battery box and are then screwed into the threaded holes in the upper brim of the lower battery box to fixedly connect the upper battery box and the lower battery box. The battery box at the bottom can be directly fixed to a vehicle frame, such that a battery frame is eliminated, and gaps between the battery boxes as well as between the battery boxes and the battery frame are avoided.
(2) The structure of the battery box enclosure can support more layers of battery boxes:
   The battery box enclosure comprises an upper brim, a bottom plate, and a vertical wall connecting the upper brim and the bottom plate, wherein a plurality of pillars are circumferentially arranged on the outer side of the vertical wall to improve the structural strength of the battery box and transmit an acting force applied to the upper brim by the upper battery box onto the bottom plate.
(3) The battery box can be located and sealed easily when stacked:
   A groove is circumferentially formed in the middle of an upper surface of the upper brim and used for receiving a sealing strip. Cylindrical bumps are arranged in the middle of the groove, and threaded holes for fixedly connecting upper and lower battery boxes are formed in the bumps. Contact planes are arranged on two sides of the groove and are slightly higher than the cylindrical bumps to bear all the acting force from the upper battery box. Locating protrusions are arranged in the middles of the contact planes and are arc-shaped. Unthreaded screw mounting holes are formed in the lower brim and are in one-to-one correspondence with the threaded holes in the upper brim. Locating grooves are formed in a lower surface of the lower brim, concave surfaces of the locating grooves are arc-shaped and correspond to the locating protrusions on the upper brim, and the size of the locating grooves is slightly greater than that of the locating protrusions to allow the upper battery box to smoothly slide to an appropriate position along the arc-shaped surfaces when stacked on the lower battery box. The other portion, other than the locating grooves, of the lower surface of the lower brim is a contact plane, wherein a portion, corresponding to the groove for mounting the sealing strip on the upper brim, of the contact plane is used for compressing the sealing strip, and remaining portions of the contact plane are in full contact with the contact planes of the upper brim to transmit the acting force from the upper battery box to the lower battery box. In a natural state, the sealing strip is higher than the contact planes of the upper brim; and when the upper battery box is stacked on the lower battery box, the sealing strip is compressed to be as high as the contact planes of the upper brim. In this way, the sealing strip can be uniformly compressed in the circumferential direction, thus ensuring the sealing effect.
(4) The cooling passage is simple, and the cooling effect is good:
   A liquid cooling vent is formed in each of two sides of a front wall of the battery box enclosure. Cooling liquid flows in the liquid cooling vent in one side and then enters a liquid collection cavity. The liquid collection cavity is a cavity machined in the battery box enclosure and has one end connected to the liquid cooling vent and the other end connected to a passage below the base plate, and the cooling liquid is transferred from the liquid collection cavity into the passage. Three stages of step grooves, cross-sectional projections of which basically cover lower surfaces of the batteries, are machined in a lower surface of the bottom plate along an inner side of the lower brim, a first stage of step groove, a second stage of step groove and a third stage of step groove are farther away from the lower surface of the bottom plate gradually, the cross-sectional projection of the upper stage of step grooves cover the cross-sectional projection of the lower stage of step groove, a first step is a contact plane of the lower brim, a bottom sealing plate is attached to a third step and defines a passage chamber together with the third stage of step groove; and after the bottom plate is attached to the third step, a lower surface of the bottom sealing plate is not higher than the contact plane of the lower brim to ensure that the contact plane of the lower brim is a lowest plane of the battery box, so as to prevent a stress failure of the bottom sealing plate and the passage. A plurality of passage partition walls are arranged on a bottom surface of the third stage of step groove and divide the passage chamber into the S-shaped passage. The cooling liquid flows along the S-shaped passage to enter the water collection cavity on the other side, flows out from the liquid cooling vent in the other side, and finally enters the next battery box or a cooling device.
(5) Wires and water lines between the battery boxes are easy to connect:
   In the invention, the battery boxes can be stacked more closely and compactly, and high-voltage wires, low-voltage wires and water lines for connecting the battery boxes are shorter and easier to arrange.
(6) Both sides of batteries can be cooled:
   Compared with battery boxes that cannot be stacked, the top cover of the battery box has a cooling effect. In the invention, the top cover of the battery box is the bottom plate, provided with the cooling passage, of the battery box located above, which means that both the bottom and the top of batteries can be cooled.

In addition, in a case where the positive and negative poles of the batteries are located on side faces rather than at the top, the bottom plate of the battery box above can be attached to the tops of the batteries by means of a middle heat conduction layer, such that the bottoms and tops of the batteries can be cooled equivalently.

### BRIEF DESCRIPTION OF THE SEVERAL VIEWS OF THE DRAWINGS

FIG. 1 is a perspective view of battery boxes and a battery system in a vehicle-mounted state in the prior art;
FIG. 2 is a perspective view of battery boxes and a battery system in a vehicle-mounted state according to the invention;
FIG. 3 is a perspective view of a system formed by multiple layers of stacked battery boxes according to the invention;
FIG. 4 is an exploded view of the system formed by multiple layers of stacked battery boxes according to the invention;
FIG. 5 is a top perspective view of a single battery box;
FIG. 6 is an enlarged view of part A in FIG. 5;
FIG. 7 is a bottom perspective structural view of a single battery box without a bottom sealing plate;
FIG. 8 is an enlarged view of part B in FIG. 7;
FIG. 9 is a partial sectional view of the vertical cross-section of a side wall of the battery box along the central axis of a mounting hole in the side face of the battery box;
FIG. 10 is an enlarged view of part C in FIG. 9;
FIG. 11 is a front view of a battery box enclosure;
FIG. 12 is a sectional view of a liquid cooling vent in position D in FIG. 11;
FIG. 13 is a top view of the battery box enclosure without a bottom sealing plate;
FIG. 14 is a perspective view of connecting wires and water lines of the system formed by multiple layers of stacked battery boxes.

In FIGS.: 10, battery system; 101, battery box; 102, battery frame; 20, vehicle frame;
1, battery box; 2, battery box cover; 3, screw fastener; 4, sealing strip;
11, battery box enclosure; 12, high-voltage connector; 13, battery monitoring unit; 14, manual service disconnect switch; 15, low-voltage connector; 16, battery; 17, heat conduction layer;
111, upper brim; 1111, threaded hole; 1132, lower brim; 1131, unthreaded screw mounting hole;
1113, groove; 1112, cylindrical bump; 1114, contact plane; 1115, locating protrusion; 1135, locating groove; 1134, contact plane;
114, liquid cooling vent; 117, liquid collection cavity; 113, bottom plate; 116, passage; 115, bottom sealing plate; 1133, passage partition wall;
301, high-voltage electrode of battery system; 302, high-voltage wire; 303, the other electrode of battery system; 401, low-voltage input of battery system; 402, low-voltage wire; 403, low-voltage output of battery system; 501, liquid inlet; 502, water line; 503, liquid outlet.

### DETAILED DESCRIPTION OF THE INVENTION

The invention is further described below in conjunction with accompanying drawings. The following embodiments are merely used for explaining the technical solutions of the invention more clearly, and are intended to limit of the protection scope of the invention.

In the description of the embodiments, it should be noted that terms such as "central", "upper", "lower", "left", "right", "vertical", "horizontal", "inner" and "outer" are used for indicating directional or positional relations based on the accompanying drawings merely for the purpose of facilitating and simplifying the description of the embodiments, do not indicate or imply that devices or elements referred to must be in a specific direction or be configured and operated in a specific direction, and thus should not be construed as limitations of the embodiments.

### Embodiment 1:

This embodiment provides a battery box capable of being stacked layer by layer, which eliminates a battery frame and avoids gaps between adjacent layers of battery boxes in the height direction, thus greatly increasing the space utilization of battery boxes in a battery system.

FIG. 2 is a perspective view of the battery boxes and a battery system in a vehicle-mounted state according to the invention. A battery system 10 eliminates a battery frame 102, and the battery boxes are stacked layer by layer to form the battery system and are then fixed to a vehicle frame 20 as a whole.

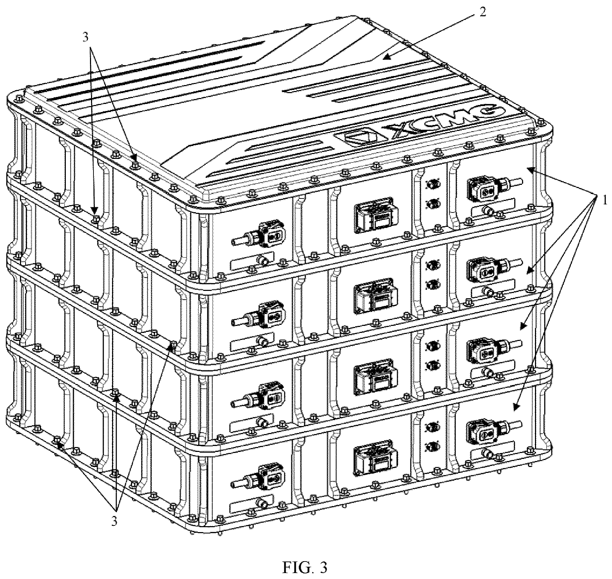

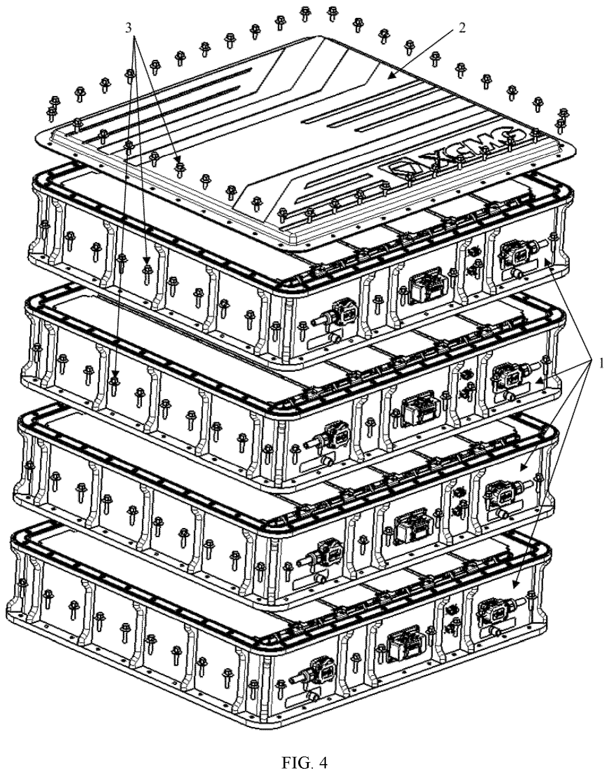

FIGS. 3 and 4 are respectively a perspective structural view and an exploded view of a system formed by multiple layers of stacked battery boxes, wherein 1 is the battery box, 2 is a battery box cover, and 3 is a screw fastener. An upper battery box 1 is directly stacked on a lower battery box 1, the battery box 1 in the middle is not provided with the battery box cover 2, a bottom plate of the upper battery box functions as a top cover of the lower battery box, and only the battery box at the top is provided with the independent battery box cover 2. As shown in FIGS. 3, 4, 5 and 6, threaded holes 1111 are circumferentially formed in an upper brim 111 of the battery box 1, unthreaded screw mounting holes 1131 are circumferentially formed in a lower brim 1132 of the battery box 1, and screw fasteners 3 penetrate through the unthreaded screw mounting holes 1131 in the lower brim of the upper battery box and are then screwed into the threaded holes 111 in the upper brim of the lower battery box 1 to fixedly connect the upper battery box and the lower battery box.

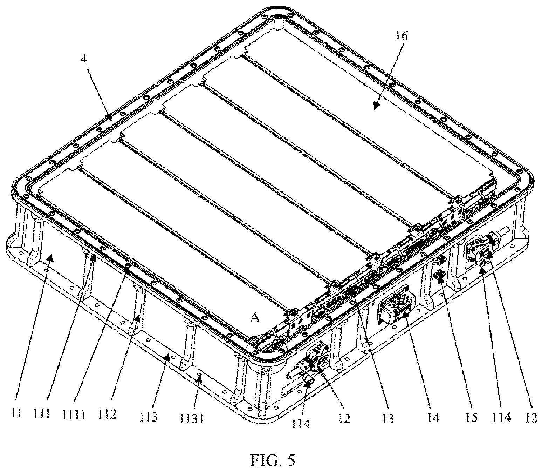

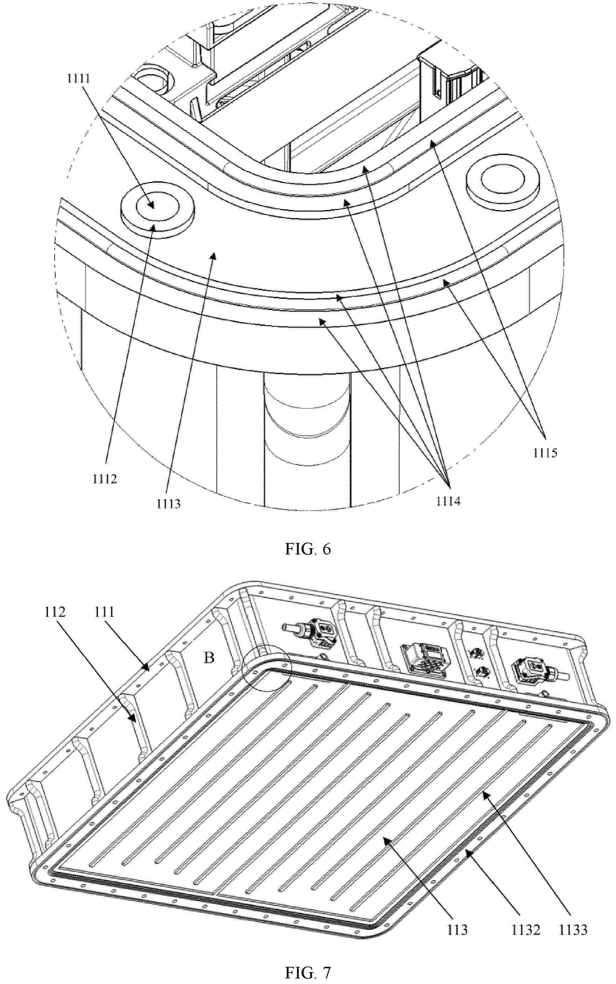

As shown in FIGS. 5 and 7, the battery box 1 comprises a battery box enclosure 11, high-voltage connectors 12, a battery monitoring unit 13, a manual service disconnect switch 14, low-voltage connectors 15 and batteries 16. The battery box enclosure 11 is a case with the top being open and the bottom being closed, and a space defined by the battery box enclosure 11 is used for receiving the battery monitoring unit 13, the batteries 16, etc. Interface devices such as the high-voltage connectors 12, the manual service disconnect switch 14 and the low-voltage connectors 15 are fixed to a vertical wall of the battery box 11. The battery box enclosure 11 comprises the upper brim 111, a bottom plate 113, and the vertical wall connecting the upper brim and the bottom plate, the lower brim 1132 is formed by the bottom plate 113 located outside the vertical wall, and a plurality of pillars 112 are circumferentially arranged on an outer side of the vertical wall to improve the structural strength of the battery box and transmit an acting force applied to the upper brim 111 by the upper battery box onto the bottom plate 113.

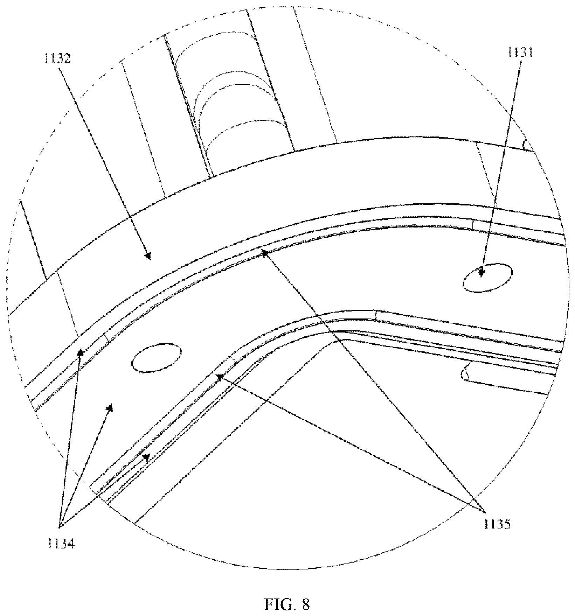

As shown in FIGS. 6, 8, 9 and 10, a groove 1113 is circumferentially formed in the middle of an upper surface of the upper brim 111 and used for receiving a sealing strip 4. Cylindrical bumps 1112 are arranged in the middle of the groove, and the threaded holes 1111 for fixedly connecting the upper and lower battery boxes 1 are formed in the bumps. Contact planes 1114 are arranged on two sides of the groove 1113 and are slightly higher than the cylindrical bumps 1112 to bear all the acting force from the upper battery box 1. Locating protrusions 1115 are arranged in the middles of the contact planes 1114 and are arc-shaped. The unthreaded screw mounting holes 1131 are formed in the lower brim 1132 and are in one-to-one correspondence with the threaded holes 1111 in the upper brim. Locating grooves 1135 are formed in a lower surface of the lower brim 1132, concave surfaces of the locating grooves are arc-shaped and correspond to the locating protrusions 1115 on the upper brim, and the size of the locating grooves 1135 is slightly greater than that of the locating protrusions 1115 to allow the upper battery box 1 to smoothly slide to an appropriate position along the arc-shaped surfaces when stacked on the lower battery box 1. The other portion, other than the locating grooves, of the lower surface of the lower brim 1132 is a contact plane 1134, wherein a portion, corresponding to the groove 1113 for mounting the sealing strip on the upper brim, of the contact plane 1134 is used for compressing the sealing strip 4, and remaining portions of the contact plane are in full contact with the contact planes 1114 of the upper brim to transmit the acting force from the upper battery box 1 to the lower battery box 1. In a natural state, the sealing strip 4 is higher than the contact planes 1114 of the upper brim; and when the upper battery box 1 is stacked on the lower battery box 1, the sealing strip 4 is compressed to be as high as the contact planes 1114 of the upper brim. In this way, the sealing strip can be uniformly compressed in the circumferential direction, thus ensuring the sealing effect.

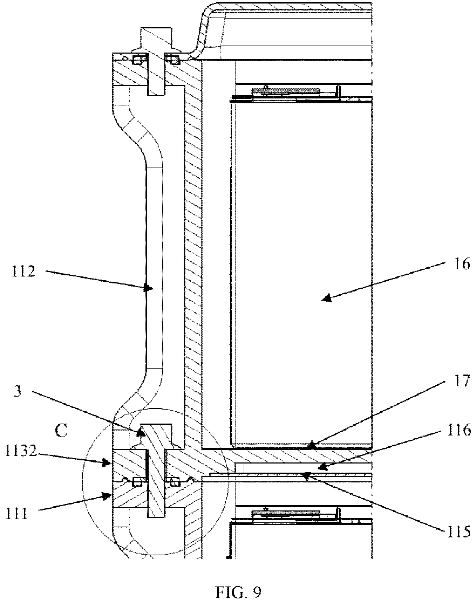

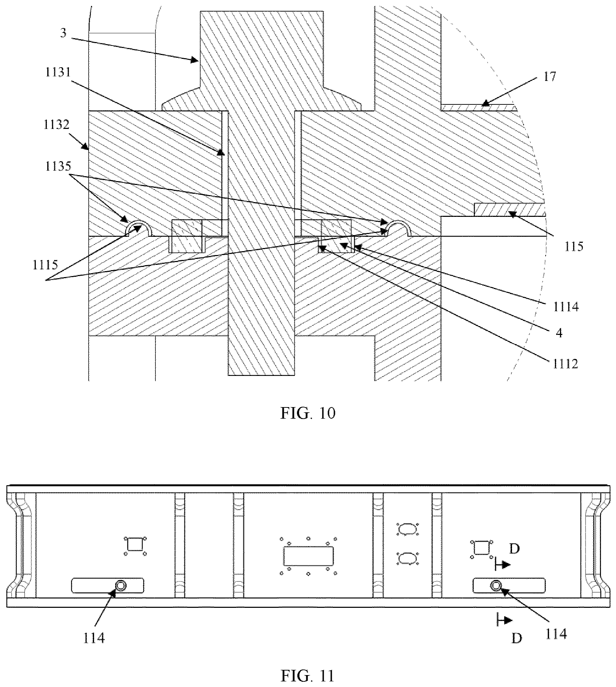

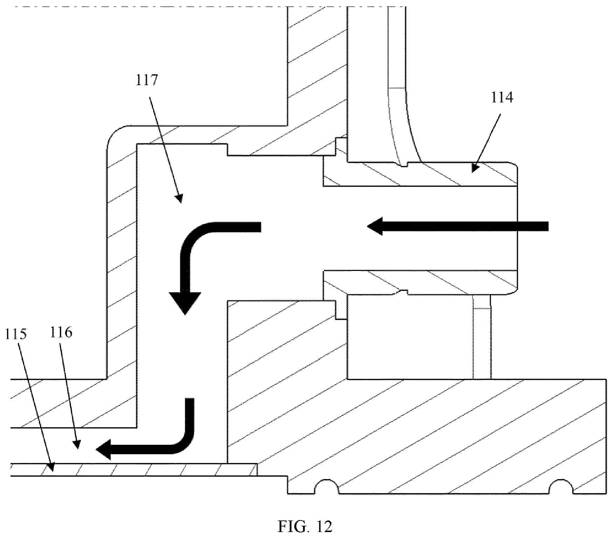

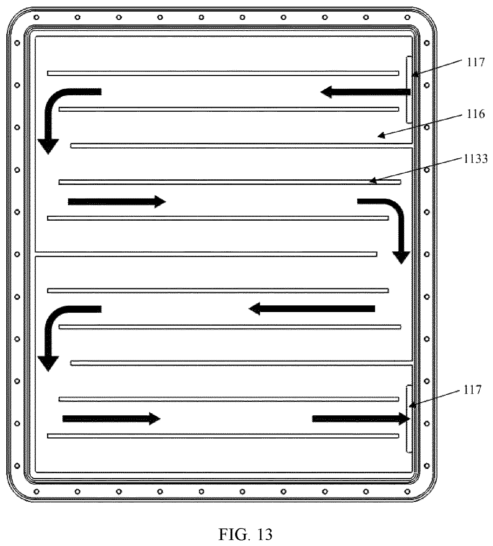

Referring to FIG. 11 which is a front view of the battery box enclosure 11, a liquid cooling vent 114 is formed in each of two sides of a front wall of the battery box enclosure 11. Referring to FIG. 12 which is a sectional view of the liquid cooling vent, cooling liquid flows in the liquid cooling vent in one side and then enters a liquid collection cavity 117. The liquid collection cavity 117 is a cavity machined in the battery box enclosure 11 and has one end connected to the liquid cooling vent 114 and the other end connected to a passage 116 below the base plate 113, and the cooling liquid is transferred from the liquid collection cavity 117 into the passage 116. As shown in FIG. 7 and FIG. 9, three stages of step grooves, cross-sectional projections of which basically cover lower surfaces of the batteries 16, are machined in a lower surface of the bottom plate 113 along an inner side of the lower brim 1132, a first stage of step groove, a second stage of step groove and a third stage of step groove are farther away from the lower surface of the bottom plate 113 gradually, the cross-sectional projection of the upper stage of step grooves cover the cross-sectional projection of the lower stage of step groove, a first step is the contact plane 1134 of the lower brim, a bottom sealing plate 115 is attached to a third step and defines a passage chamber together with the third stage of step groove; and after the bottom plate 115 is attached to the third step, a lower surface of the bottom sealing plate 115 is not higher than the contact plane 1134 of the lower brim to ensure that the contact plane 1134 of the lower brim is a lowest plane of the battery box 1, so as to prevent a stress failure of the bottom sealing plate 115. A plurality of passage partition walls 1133 are arranged on a bottom surface of the third stage of step groove and divide the passage chamber into the S-shaped passage 116. The cooling liquid flows along the S-shaped passage to enter the water collection cavity 117 on the other side, flows out from the liquid cooling vent 114 in the other side, and finally enters the next battery box 1 or a cooling device. The flow direction of the cooling liquid in the battery box 1 is shown in FIG. 12 and FIG. 13, heat of the batteries 16 is conducted onto the bottom plate 113 by means of a heat conduction layer 17 at the bottom and then taken away by the cooling liquid circulating in the passage 116 in the bottom plate.

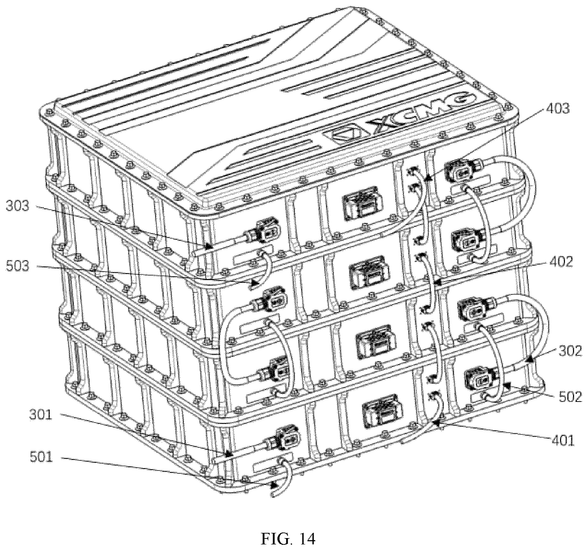

FIG. 14 is a perspective view of connecting wires and water lines of the system formed by multiple layers of stacked battery boxes. Because the battery boxes in the invention can be stacked more closely and compactly, high-voltage wires, low-voltage wires and water lines for connecting the battery boxes are shorter and easier to arrange. One high-voltage electrode 301 of the battery system is connected to the high-voltage connector on one side of the battery box at the bottom by means of a high-voltage wire, the high-voltage connector on the other side of the battery box at the bottom is connected to the high-voltage connector on the same side of the adjacent battery box above by means of a high-voltage wire 302, similarly, the high-voltage connector on the other side of the battery box is connected to the high-voltage connector on the same side of the adjacent battery box above by means of a high-voltage wire 302, the battery boxes are stacked layer by layer in this way, and a high-voltage wire led out from the high-voltage connector on one side of the battery box at the top is used as the other electrode 303 of the battery system. The low-voltage wires and the water lines of the battery system are arranged in a similar way to the high-voltage wires. 401 is a low-voltage input of the battery system, the low-voltage connectors of every two adjacent layers of battery boxes are connected by means of a low-voltage wire 402, and a low-voltage wire 402 led out from the battery box at the top is used as a low-voltage output 403 of the battery system. 501 is a liquid inlet of the battery system, and the liquid cooling vents of every two adjacent layers of battery boxes are connected by means of a water line 502, and a liquid outlet 503 of the battery system is led out from the battery box at the top. When the battery system operates in the vehicle-mounted state, the battery monitoring unit 13 in each battery box measures voltage, temperature and other data of each battery in the battery box and transmits signals to a main controller by means of the low-voltage wires 401 and 403, and the main controller determines whether liquid cooling needs to be started or whether the high-voltage current of the battery system needs to be limited according to received information. For example, when cooling is started, cooling liquid flows into the battery system via the liquid inlet 501, flows through the S-shaped passage 116 in the bottom plate of the battery box, then enters the S-shaped passage of the next battery box by means of the water line 502, and finally flows out of the battery system via the liquid outlet 503. Compared with battery boxes that cannot be stacked, the top cover of the battery box has a cooling effect. In the invention, the top cover of the battery box is the bottom plate, provided with the cooling passage, of the battery box located above, which means that both the bottom and the top of batteries can be cooled. Further, in a case where the positive and negative poles of the batteries are located on side faces rather than at the top, the bottom plate of the battery box above can be attached to the tops of the batteries by means of a middle heat conduction layer, such that the bottoms and tops of the batteries can be cooled equivalently.

The battery box capable of being stacked layer by layer provided by the invention has the following innovations:
(1) The battery boxes can be stacked layer and layer, thus eliminating a battery frame.
(2) The structure of the battery box enclosure can support more layers of battery boxes.
(3) The battery box can be located and sealed easily when stacked.
(4) The cooling passage is simple, and the cooling effect is good.
(5) The wires and water lines between the battery boxes are easy to connect.
(6) Both sides of batteries can be cooled.

The invention can greatly increase the space utilization of battery boxes in a battery system, such that a vehicle can be loaded with more batteries under the same volume; moreover, by adopting this technical solution, a cooling system can also exert a benefit effect on the tops of the batteries, thus improving heat management efficiency; in addition, the technical solution facilitates connection of wires and water lines between the battery boxes.

By adopting the invention, the battery boxes can be stacked more closely and compactly, and the high-voltage wires, low-voltage wires and water lines for connecting the battery boxes are shorter and easier to arrange.

### Embodiment 2:

This embodiment provides a battery system 10, which eliminates a battery frame and comprises multiple battery boxes as described in Embodiment 1, and the battery boxes are stacked layer by layer to form the battery system. The battery system is mounted on a vehicle frame.

FIG. 2 is a perspective view of the battery boxes and the battery system in a vehicle-mounted state according to the invention. The battery system 10 eliminates a battery frame 102, and the battery boxes are stacked layer by layer to form the battery system and are then fixed to a vehicle frame 20 as a whole.

FIG. 14 is a perspective view of connecting wires and water lines of the system formed by multiple layers of stacked battery boxes. Because the battery boxes in the invention can be stacked more closely and compactly, high-voltage wires, low-voltage wires and water lines for connecting the battery boxes are shorter and easier to arrange. One high-voltage electrode 301 of the battery system is connected to the high-voltage connector on one side of the battery box at the bottom by means of a high-voltage wire, the high-voltage connector on the other side of the battery box at the bottom is connected to the high-voltage connector on the same side of the adjacent battery box above by means of a high-voltage wire 302, similarly, the high-voltage connector on the other side of the battery box is connected to the high-voltage connector on the same side of the adjacent battery box above by means of a high-voltage wire 302, the battery boxes are stacked layer by layer in this way, and a high-voltage wire led out from the high-voltage connector on one side of the battery box at the top is used as the other electrode 303 of the battery system. The low-voltage wires and the water lines of the battery system are arranged in a similar way to the high-voltage wires. 401 is a low-voltage input of the battery system, the low-voltage connectors of every two adjacent layers of battery boxes are connected by means of a low-voltage wire 402, and a low-voltage wire 402 led out from the battery box at the top is used as a low-voltage output 403 of the battery system. 501 is a liquid inlet of the battery system, and the liquid cooling vents of every two adjacent layers of battery boxes are connected by means of a water line 502, and a liquid outlet 503 of the battery system is led out from the battery box at the top. When the battery system operates in the vehicle-mounted state, the battery monitoring unit 13 in each battery box measures voltage, temperature and other data of each battery in the battery box and transmits signals to a main controller by means of the low-voltage wires 401 and 403, and the main controller determines whether liquid cooling needs to be started or whether the high-voltage current of the battery system needs to be limited according to received information. For example, when cooling is started, cooling liquid flows into the battery system via the liquid inlet 501, flows through the S-shaped passage 116 in the bottom plate of the battery box, then enters the S-shaped passage of the next battery box by means of the water line 502, and finally flows out of the battery system via the liquid outlet 503. Compared with battery boxes that cannot be stacked, the top cover of the battery box has a cooling effect. In the invention, the top cover of the battery box is the bottom plate, provided with the cooling passage, of the battery box located above, which means that both the bottom and the top of batteries can be cooled. Further, in a case where the positive and negative poles of the batteries are located on side faces rather than at the top, the bottom plate of the battery box above can be attached to the tops of the batteries by means of a middle heat conduction layer, such that the bottoms and tops of the batteries can be cooled equivalently.

In addition, terms "first" and "second" are merely for the purpose of description, and should not be construed as indicating or implying relative importance or implicitly indicating the number of technical features referred to. Therefore, a feature defined by "first" or "second" may explicitly or implicitly indicate the inclusion of one or more said features. In the description of the invention, "multiple" refers to two or more, unless otherwise expressly and specifically defined.

In the invention, unless otherwise expressly stated and defined, terms such as "mount", "link", "connect" and "fix" should be broadly understood. For example, "connect" may refer to fixed connection, detachable connection or integrated connection; or, mechanical connection or electrical connection; or, direct connection, indirect connection via an intermediate medium, or internal connection of two elements. Those ordinarily skilled in the art can appreciate the specific meanings of these terms in the invention as the case may be.

In the invention, unless otherwise expressly stated and defined, if a first feature is located "over" or "under" a second feature, it means that the first feature and the second feature are in direct contact or the first feature and the second feature are in contact by means of another feature therebetween rather than being in direct contact. In addition, if a first feature is located "over", "above" and "on" a second feature, it means that the first feature is located exactly or obliquely above the second feature or the altitude of the first feature is greater than the second feature. If a first feature is located "under", "below" or "underneath" a second feature, it means that the first feature is exactly or obliquely located below the second feature or the altitude of the first feature is less than the altitude of the second feature.

In the description of the specification, reference terms "one embodiment", "some embodiments", "example", "specific example" or "some examples" are intended to indicate that specific features, structure, materials or characteristics described in conjunction with said embodiment or example are included in at least one embodiment or example of the invention. In the specification, illustrative expressions of these terms do not definitely refer to the same embodiment or example. In addition, these specific features, structures, materials or characteristics can be appropriately combined in any one or more embodiments or examples.

Although the embodiments of the invention have been illustrated and described above, it can be understood that the above embodiments are illustrative and should not be construed as limitations of the invention. Those ordinarily skilled in the art can make variations, amendments, substitutions and transformations to the above embodiments within the scope of the invention without departing from the principle and concept of the invention.

## Claims

1. A battery box capable of being stacked layer by layer, wherein the battery box is configured as a box structure;
threaded holes are circumferentially formed in an upper portion of the battery box, and unthreaded screw mounting holes corresponding to the threaded holes are formed in a lower portion of the battery box;
screw fasteners penetrate through the unthreaded screw mounting holes of an upper battery box and the threaded holes of a lower battery box to fixedly connect the upper battery box and the lower battery box.

2. The battery box capable of being stacked layer by layer according to Claim 1, wherein the battery box comprises a battery box enclosure, a battery monitoring unit, interface devices and batteries;
the battery box enclosure is a case with a top being open and a bottom being closed, and a space defined by the battery box enclosure is used for receiving the battery monitoring unit and the batteries;
the interface devices are fixed to a vertical wall of the battery box;
the interface devices comprise high-voltage connectors, a manual service disconnect switch and low-voltage connectors;
the battery box enclosure comprises an upper brim, a bottom plate and the vertical wall connecting the upper brim and the bottom plate, and a lower brim is formed by the bottom plate located outside the vertical wall;
a plurality of pillars are circumferentially arranged on an outer side of the vertical wall.

3. The battery box capable of being stacked layer by layer according to Claim 2, wherein a groove is circumferentially formed in a middle of an upper surface of the upper brim and used for receiving a sealing strip;
cylindrical bumps are arranged in a middle of the groove, and the threaded holes for fixedly connecting the upper battery box and the lower battery box are formed in the bumps;
contact planes are arranged on two sides of the groove and are slightly higher than the cylindrical bumps to bear an acting force from the upper battery box;
locating protrusions are arranged in middles of the contact planes and are arc-shaped;
the unthreaded screw mounting holes are formed in the lower brim and are in one-to-one correspondence with the threaded holes in the upper brim;
locating grooves are formed in a lower surface of the lower brim, concave surfaces of the locating grooves are arc-shaped and correspond to the locating protrusions on the upper brim, and a size of the locating grooves is slightly greater than that of the locating protrusions to allow the upper battery box to smoothly slide to an appropriate position when stacked on the lower battery box;
the other portion, other than the locating grooves, of the lower surface of the lower brim is a contact plane; a portion, corresponding to the groove in the upper brim, of the contact plane is used for compressing the sealing strip, and remaining portions of the contact plane are in full contact with the contact planes of the upper brim to transmit the acting force from the upper battery box to the lower battery box;
in a natural state, the sealing strip is higher than the contact planes of the upper brim; and after the upper battery box is stacked on the lower battery box, the sealing strip is compressed to be as high as the contact planes of the upper brim.

4. The battery box capable of being stacked layer by layer according to Claim 2, wherein a liquid cooling vent is formed in each of two sides of a front wall of the battery box enclosure, and cooling liquid flows into the liquid cooling vent in one side and then enters a liquid collection cavity formed in the battery box enclosure;
the liquid collection cavity is a cavity formed in the battery box enclosure and has one end connected to the liquid cooling vent and the other end connected to a passage below the bottom plate, and the cooling liquid is transferred from the liquid collection cavity into the passage.

5. The battery box capable of being stacked layer by layer according to Claim 4, wherein three stages of step grooves, cross-sectional projections of which cover lower surfaces of the batteries, are machined in a lower surface of the bottom plate along in an inner side of the lower brim; a first stage of step groove, a second stage of step groove and a third stage of step groove are farther away from the lower surface of the bottom plate gradually, and the cross-sectional projection of the upper stage of step groove covers the cross-sectional projection of the lower stage of step groove; a first step is a contact plane of the lower brim, and a bottom sealing plate is attached to a third step and defines a passage chamber together with the third stage of step groove; and after the bottom sealing plate is attached to the third step, a lower surface of the bottom sealing plate is higher than the contact plane of the lower brim to ensure that the contact plane of the lower brim is a lowest plane of the battery box, so as to prevent a stress failure of the bottom sealing plate;
a plurality of passage partition walls are arranged on a bottom surface of the third stage of step groove and divide the passage chamber into an S-shaped passage; and the cooling liquid flows along the S-shaped passage to enter a liquid collection cavity in the other side, then flows out via the liquid cooling vent in the other side, and finally enters a next battery box or a cooling device.

6. A battery system, wherein the battery system eliminates a battery frame and comprises multiple battery boxes according to any one of Claims 1-5, and the battery boxes are stacked layer by layer to form the battery system;
the battery system is fixedly mounted on a vehicle.

7. The battery system according to Claim 6, wherein an upper battery box is directly stacked on a lower battery box, the battery box in the middle is not provided with a battery box cover, a bottom plate of the upper battery box functions as a top cover of the lower battery box, the battery box at the top is provided with the battery box cover, the battery box cover is provided with unthreaded screw mounting holes corresponding to threaded holes of the battery box at the top, and screw fasteners penetrate through the unthreaded screw mounting holes of the battery box cover and the threaded holes of the battery box at the top to fixedly connect the battery box cover and the battery box at the top.

8. The battery system according to Claim 6, wherein the battery box comprises a battery box enclosure, a battery monitoring unit, interface devices and batteries; the battery box enclosure is a case with a top being open and a bottom being closed, and a space defined by the battery box enclosure is used for receiving the battery monitoring unit and the batteries; the interface devices are fixed to a vertical wall of the battery box; the interface devices comprise two high-voltage connectors, a manual service disconnect switch and two low-voltage connectors;
one high-voltage electrode of the battery system is connected to the high-voltage connector on one side of the battery box at the bottom by means of a high-voltage wire, and the high-voltage connector on the other side of the battery box at the bottom is connected to the high-voltage connector on the same side of the adjacent battery box above by means of a high-voltage wire;
the high-voltage connector on one side of the battery box in the middle is connected to one high-voltage connector of the battery box below by means of a high-voltage wire, and the high-voltage connector on the other side of the battery box in the middle is connected to the high-voltage connector on the same side of the battery box above by means of a high-voltage wire;
the high-voltage connector on one side of the battery box at the top is connected to one high-voltage connector of the battery box below by means of a high-voltage wire, and a high-voltage wire led out from the high-voltage connector on the other side of the battery box at the top used as the other electrode of the battery system;
a low-voltage input of the battery system is connected to one low-voltage connector of the battery box at the bottom by means of a low-volage wire, and the other low-voltage connector of the battery box at the bottom is connected to one low-voltage connector of the adjacent battery box above by means of a low-voltage wire;
one low-voltage connector of the battery box in the middle is connected to one low-voltage connector of the battery box below by means of a low-voltage wire, and the other low-volage connector of the battery box in the middle is connected to one low-voltage connector of the battery box above by means of a low-volage wire;
one low-volage connector of the battery box at the top is connected to one low-voltage connector of the battery box below by means of the low-voltage wire, and a low-voltage wire led out from the other low-volage connector of the battery box at the top used as a low-voltage output of the battery system;
one liquid cooling vent of the battery box at the bottom is a liquid inlet of the battery system, the liquid cooling vents of every two adjacent layers of battery boxes are connected by means of a water line, and a liquid outlet of the battery system is led out from the battery box at the top.

9. The battery system according to Claim 8, wherein When the battery system operates in a vehicle-mounted state, the battery monitoring unit in each battery box measures voltage and temperature data of each battery in the battery box and transmits signals to a main controller by means of the low-voltage wire, and the main controller determines whether liquid cooling needs to be started or whether a high-voltage current of the battery system needs to be limited according to received information;
when cooling is started, cooling liquid flows into the battery system via the liquid inlet, flows through the S-shaped passage in the bottom plate of the battery box, then enters the S-shaped passage of the next battery box, and finally flows out of the battery system via the liquid outlet.

10. The battery system according to Claim 8, wherein in a case where positive and negative poles of the batteries are located on side faces, the bottom plate of the battery box above is attached to tops of the batteries by means of a middle heat conduction layer.
